# FASCICULE DE BREVET EUROPEEN

(11) **EP 3 233 367 B1**
(45) Date de publication et mention de la délivrance du brevet: **12.02.2020**
(21) Numéro de dépôt: 15821141.7
(22) Date de dépôt: 16.12.2015
(51) Int. Cl.: B23P 6/00, F01D 5/00, F01D 25/24

(54) **PROCEDE DE REPARATION D'UN CARTER DE SOUFFLANTE ET CARTER DE SOUFFLANTE**
VERFAHREN ZUR REPARATUR EINES FANGEHÄUSES UND FANGEHÄUSE
METHOD FOR REPAIRING A FAN CASING AND FAN CASING

(30) Priorité: 16.12.2014 FR 1462472
(43) Date de publication de la demande: 25.10.2017
(73) Titulaire: SAFRAN AIRCRAFT ENGINES, 75015 Paris (FR)
(72) Inventeur: DESREUMAUX, Antoine Patrice Marie, 77390 Guignes (FR); REGHEZZA, Patrick Jean-Louis, 77000 Vaux Le Penil (FR); PEREZ, Sébastien Marc Jean-Michel, 38540 Heyrieux (FR)
(74) Mandataire: Cabinet Camus Lebkiri
(86) Numéro de dépôt international: PCT/FR2015/053536
(87) Numéro de publication internationale: WO 2016/097597

(56) Documents cités:
- FR-A1- 2 973 845
- GB-A- 2 455 063
- US-A- 5 486 086
- US-A1- 2006 013 681
- US-A1- 2008 253 883
- US-A1- 2013 082 088

## Description

### DOMAINE TECHNIQUE DE L'INVENTION

L'invention se rapporte à un procédé de réparation d'un carter de soufflante d'un moteur d'avion. Un tel procédé est décrit dans le document US 2013/082088 A1. A titre d'exemple non limitatif, le procédé de réparation d'un carter de soufflante s'applique à des carters de soufflante mis en œuvre sur des moteurs d'avion de type CFM56-7B.

L'invention se rapporte aussi à un carter de soufflante selon le préambule de la revendication 8. Un tel carter de soufflante est connu du document US 2008/253883 A1.

### ARRIERE PLAN TECHNOLOGIQUE DE L'INVENTION

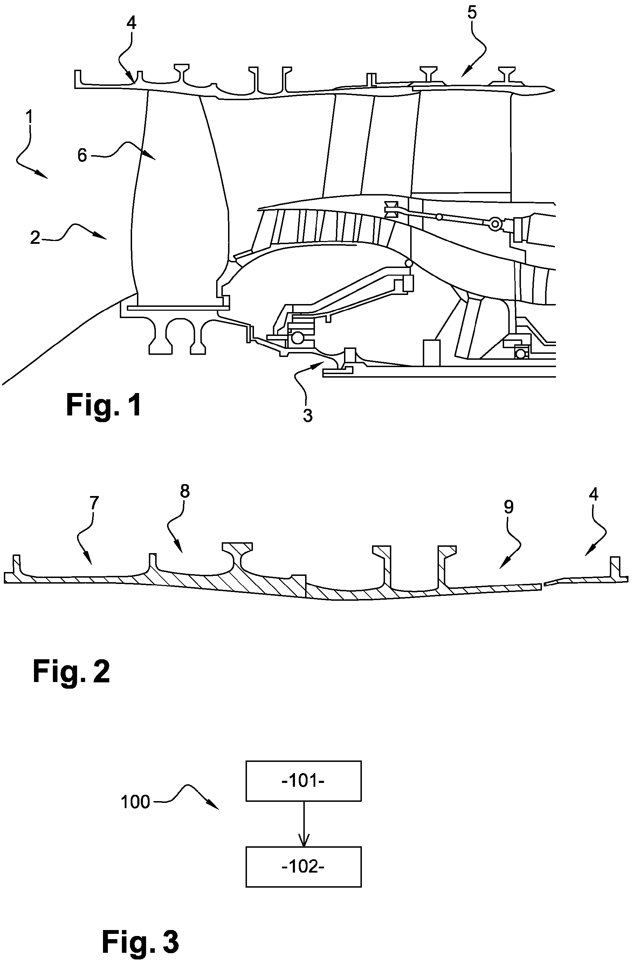

Tel qu'illustré sur la figure 1, un moteur d'avion 1 comporte habituellement un compresseur basse pression 2 muni d'un arbre de compresseur 3 entouré par un carter de soufflante 4 (également connu sous la dénomination carter FAN) et d'un carter intermédiaire 5. Le carter de soufflante 4 assure notamment la rétention des aubes de soufflante 6 et également la rétention de fragments d'aube de soufflante 6. En effet, lorsqu'un corps étranger entre en collision avec une aube de soufflante 6, cette dernière peut être endommagée. Lors d'un tel endommagement, des fragments d'aubes peuvent se détacher de l'aube 6 en rotation pour venir se positionner, sous un effet de centrifugation, au contact de la surface interne du carter de soufflante 4. Un tel endommagement peut également être dû à des phénomènes vibratoires.

Plus particulièrement, comme illustré à la figure 2, ce type de carter de soufflante 4 présente habituellement trois parties distinctes 7, 8, 9 dimensionnées de sorte à contenir chaque fragment d'aube lors d'un événement de perte d'aube 6. Lors de la perte d'une aube 6, les parties amont 7 et aval 9, moins épaisses, contiennent respectivement le sommet d'aube et le pied d'aube alors que la partie centrale 8 (dénommée partie de rétention) permet de contenir les fragments d'aube centrifugés à plus haute énergie. Ainsi, au cours de la vie d'un moteur d'avion 1, des dommages de types impacts apparaissent sur le carter de soufflante 4 et il est nécessaire de garantir que celui-ci puisse résister à de tels dommages. Dans le but d'améliorer la durée de vie du carter de soufflante 4, il est possible d'utiliser des carters de soufflante 4 dont la zone de rétention est plus épaisse. Néanmoins, cet épaississement ayant été mis en œuvre à compter de 2013, la majeure partie de la flotte de moteurs d'avion 1 commercialisés auparavant ne bénéficie pas de cet épaississement. De ce fait, une grande quantité de carters 4 sont hors services suite à l'apparition de dommages. En outre, un tel épaississement augmente la masse totale de l'avion muni de ce carter de soufflante et augmente de facto la consommation de carburant.

### DESCRIPTION GENERALE DE L'INVENTION

L'invention offre une solution aux problèmes évoqués précédemment en proposant un procédé de réparation d'un carter de soufflante ayant subi des dommages au niveau de sa surface interne, le procédé de réparation permettant d'augmenter la durée de vie des carters de soufflante tout en ayant un impact limité en termes de masse.

La solution est définie dans les revendications indépendantes 1 et 8. Les modes de réalisation préférés sont décrits dans les revendications dépendantes.

Un aspect de l'invention porte sur un procédé de réparation d'un carter de soufflante présentant un dommage sur sa surface interne, ledit procédé comportant une étape de fixation d'un élément de renfort sur le carter de soufflante, ledit élément de renfort étant fixé sur la surface externe du carter de soufflante et en regard du dommage.

On entend par surface interne, la surface périphérique intérieure du carter de soufflante, et par surface externe, la surface périphérique extérieure du carter de soufflante.

En d'autres termes, la réparation réalisée au moyen du procédé selon l'invention prend la forme d'un élément de renfort (ou patch) fixé sur la surface extérieure du carter de soufflante, c'est-à-dire à l'opposé du dommage qui est situé au niveau de la surface intérieure. Cet élément de renfort reprend les sollicitations (traction et cisaillement) sur la surface extérieure et permet une surépaisseur locale au niveau de la partie endommagée. Cet élément de renfort augmente les caractéristiques mécaniques du carter de soufflante. En outre, le fait de fixer cet élément de renfort sur la surface extérieure permet de s'affranchir des contraintes liées à la réparation sur surface intérieure qui sont notamment le respect des jeux de fonctionnement et la complexité de réparation.

Le procédé selon l'invention offre donc une réparation simple réalisée sur la surface extérieure du carter de soufflante, cette réparation permettant de restituer les propriétés mécaniques initiales du carter de soufflante ayant subi un dommage au niveau de sa surface interne.

En outre, le procédé selon l'invention est applicable à tous les modèles de moteurs (indifféremment sur carter alu, titane, acier ou même composite).

Par ailleurs, comme il n'y a pas de modification de la surface interne du carter de soufflante, les jeux de fonctionnement ne sont pas modifiés.

De surcroît, l'élément de renfort peut être adapté pour tout type de dommages et toutes dimensions.

En outre, en comparaison avec les carters de soufflante présentant une épaisseur plus importante que propose l'état de la technique, le gain de masse est considérable puisque l'élément de renfort permet une réparation locale des dommages.

En sus, le procédé de réparation selon l'invention permet d'éviter les rebuts de carters de soufflante considérés comme non acceptables du fait des dommages présents sur la surface interne.

Dans un mode de mise en œuvre non limitatif du procédé de réparation conforme à l'invention, le procédé comporte une étape préalable de dimensionnement de l'élément de renfort.

Dans un mode de mise en œuvre non limitatif du procédé de réparation conforme à l'invention, l'étape de dimensionnement de l'élément de renfort est réalisée en estimant une zone de fissuration prenant naissance au niveau de la surface interne et sur le pourtour du dommage et se propageant en s'évasant en direction de la surface externe pour créer, sur la surface externe du carter de soufflante, une surface de fissuration externe, la surface de l'élément de renfort devant être fixée sur la surface externe du carter de soufflante étant au moins égale à la surface de fissuration externe. De telles dimensions de l'élément de renfort permettent de conférer, au carter de soufflante réparé, des propriétés mécaniques similaires aux propriétés mécaniques que possède un carter de soufflante ne comportant pas de dommage.

Dans un mode de mise en œuvre non limitatif du procédé de réparation conforme à l'invention, l'étape de dimensionnement de l'élément de renfort est réalisée en estimant une zone de fissuration prenant naissance au niveau de la surface interne et sur le pourtour du dommage et se propageant en s'évasant en direction de la surface externe pour créer, sur la surface externe du carter de soufflante, une surface de fissuration externe, la surface de l'élément de renfort devant être fixée sur la surface externe du carter de soufflante étant égale à la surface de fissuration externe. De telles dimensions de l'élément de renfort permettent de conférer, au carter de soufflante réparé, des propriétés mécaniques similaires aux propriétés mécaniques que possède un carter de soufflante ne comportant pas de dommage, et en outre n'augmente pas le poids du carter de soufflante de façon significative puisque les dimensions de l'élément de renfort sont limitées.

Dans un mode de mise en œuvre non limitatif du procédé de réparation conforme à l'invention, la zone de fissuration prend naissance au niveau de la surface interne et sur le pourtour du dommage et se propage en s'évasant en direction de la surface externe selon un angle de propagation α compris entre 40 et 50 degrés.

Dans un mode de mise en œuvre non limitatif du procédé de réparation conforme à l'invention, l'épaisseur de l'élément de renfort est au moins égale à 1,5 fois la profondeur du dommage.

Dans un mode de mise en œuvre non limitatif du procédé de réparation conforme à l'invention, l'élément de renfort est fixé sur la surface externe du carter de soufflante par soudage, par rivetage ou par collage.

Un autre aspect de l'invention concerne un carter de soufflante comportant :
- un dommage positionné sur la surface interne du carter de soufflante, et
- un élément de renfort fixé sur la surface externe du carter de soufflante et en regard du dommage.

Dans un mode de mise en œuvre non limitatif du procédé de réparation conforme à l'invention, l'élément de renfort est en aluminium, inconel, ou en titane.

Dans un mode de mise en œuvre non limitatif du procédé de réparation conforme à l'invention, l'élément de renfort présente une forme de type rectangulaire, circulaire ou elliptique.

### BREVE DESCRIPTION DES FIGURES

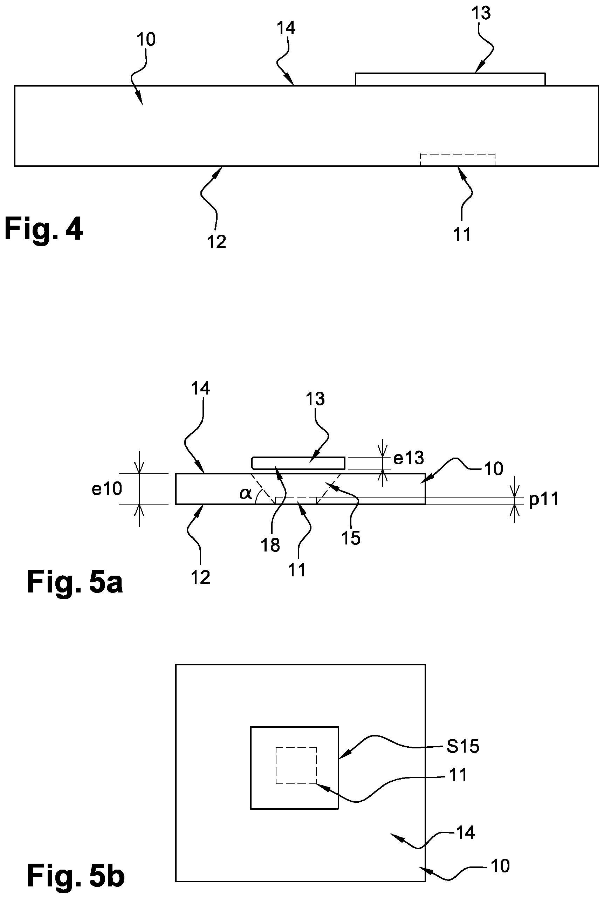

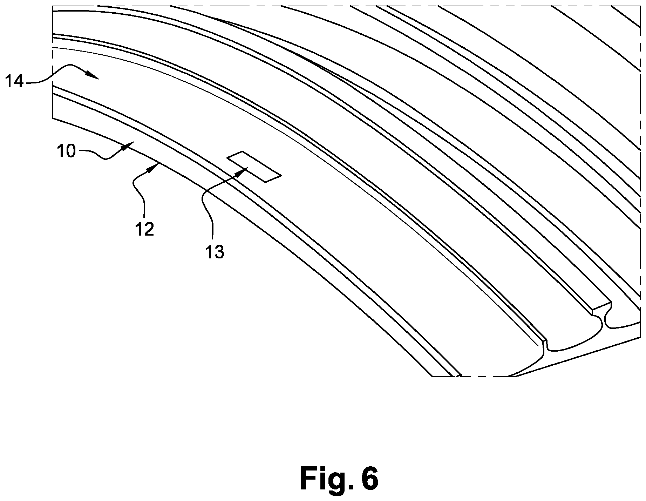

Les figures ne sont présentées qu'à titre indicatif et nullement limitatif de l'invention. Les figures montrent :
- A la figure 1, une représentation schématique d'un moteur d'avion muni d'un carter de soufflante selon l'état de la technique ;
- A la figure 2, un agrandissement d'une partie du carter de soufflante illustré à la figure 1 ;
- A la figure 3, un synoptique des étapes d'un procédé de réparation d'un carter de soufflante conforme à l'invention ;
- A la figure 4, une partie d'un carter de soufflante comportant un dommage et un élément de renfort;
- A la figure 5A, une vue de profil d'une partie d'un carter de soufflante présentant un dommage, une zone de fissuration et un élément de renfort,
- A la figure 5B, une vue de dessus de la partie du carter de soufflante représentée à la figure 5A et une surface de fissuration externe, la figure 5B ne représentant pas, pour des raisons de clarté, l'élément de renfort illustré à la figure 5A,
- A la figure 6, un carter de soufflante comportant un élément de renfort.

### DESCRIPTION DETAILLEE D'AU MOINS UN MODE DE REALISATION DE L'INVENTION

Sauf précision contraire, un même élément apparaissant sur des figures différentes présente une référence unique.

La figure 3 représente les étapes du procédé 100 de réparation d'un carter de soufflante selon une mise en œuvre non limitative de l'invention.

Pour des raisons de clarté, la figure 4 illustre de façon schématique seulement une partie d'un carter de soufflante 10 comportant un dommage 11, par exemple de type impact, au niveau de sa surface interne 12. Cette figure 4 illustre également un élément de renfort 13 conforme à celui utilisé par le procédé 100 de réparation. L'élément de renfort 13 est fixé sur la surface externe 14 du carter de soufflante 10.

Le procédé de réparation 100 de carter de soufflante 10 comporte une étape 101 de dimensionnement d'un élément de renfort 13. Lors d'une étape ultérieure 102, l'élément de renfort 13 dimensionné est fixé sur la surface externe 14 du carter de soufflante 10 et en regard du dommage 11.

Dans une mise en œuvre non limitative, l'étape 101 de dimensionnement de l'élément de renfort 13 est réalisée en estimant une surface de fissuration. Pour ce faire, on détermine dans un premier temps une zone de fissuration.

En effet, des contraintes de cisaillement sont appliquées au carter de soufflante 10 lors de son fonctionnement. Ainsi, lorsque le carter de soufflante 10 présente un dommage 11 sur la surface interne 12, des contraintes de cisaillement sont appliquées au niveau du dommage 11. Sous l'effet de ces contraintes, le dommage 11 à tendance à se propager en direction de la surface externe 14 du carter de soufflante 10. Cette propagation du dommage 11 forme une zone de fissuration.

Ainsi, lorsque l'on simule une contrainte de cisaillement appliquée au dommage 11, il est possible de prédire la zone de fissuration.

La figure 5A illustre une telle zone de fissuration 15, laquelle créée sur la surface externe 14 du carter de soufflante 10, une surface de fissuration S15 externe. Plus particulièrement, la zone de fissuration 15 prend naissance au niveau de la surface interne 12 et sur le pourtour du dommage 11 et se propage en s'évasant en direction de la surface externe 14 pour créer la surface de fissuration S15 externe (figure 5B) située sur la surface externe 14 du carter de soufflante 10. L'élément de renfort 13 est dimensionné en fonction de cette surface de fissuration externe S15. Par exemple, la surface 18 de l'élément de renfort 13 devant être fixée sur la surface externe 14 du carter de soufflante 10 est au moins égale à la surface de fissuration S15 externe. Ainsi, l'élément de renfort 13 recouvre en totalité la surface de fissuration S15 externe de manière à ce que les propriétés mécaniques du carter de soufflante 10 soient similaires à ce qu'elles étaient avant l'apparition du dommage 11.

Dans une mise en œuvre non limitative illustrée aux figures 5A et 5B, la zone de fissuration 15 prend naissance au niveau de la surface interne 12 et sur le pourtour du dommage 11 et se propage en s'évasant en direction de la surface externe 14 selon un angle de propagation α de 45 degrés. L'angle de propagation est mesuré entre la surface interne 12 et la surface périphérique de la zone de fissuration 15.

De façon non limitative, l'angle de propagation α peut être compris entre 40 et 50 degrés.

Par ailleurs, l'épaisseur de l'élément de renfort e13 peut être égale à 1,5 fois la profondeur p11 du dommage 11.

Dans un exemple non limitatif, l'épaisseur minimale de l'élément de renfort 13 est de 1 mm.

Selon une telle mise en œuvre, pour un dommage 11 de 1 mm de profondeur, l'épaisseur e13 de l'élément de renfort 13 est de 1,5 mm.

Pour résumer, dans l'exemple illustré et détaillé à l'appui des figures 5A et 5B, pour un carter de soufflante 10 présentant une épaisseur e10 de 22 mm, un dommage de 1 mm de profondeur p11 et une orientation de la propagation du dommage 11 selon un angle de propagation α de 45 degrés, l'élément de renfort 13 dimensionné présente une surface 18 qui doit être mise au contact de la surface externe 14 du carter de soufflante au moins égale à la surface de fissuration S15 externe et dont l'épaisseur est de 1, 5 mm.

L'élément de renfort 13 est une pièce rapportée qui peut être, par exemple, en aluminium, alliage à base nickel ou encore titane. Cet élément de renfort 13 peut être, par exemple, carré, rectangulaire ou elliptique.

Le procédé 100 de réparation de carter de soufflante selon l'invention comporte également une étape 102 de fixation de l'élément de renfort 13 sur le carter de soufflante 10. L'élément de renfort 13 est fixé sur la surface externe 14 du carter de soufflante et en regard de l'impact 11.

L'élément de renfort 13 peut par exemple être fixé sur la surface externe 14 du carter de soufflante 10 au moyen d'une soudure, de rivets ou par collage. Il est entendu que l'homme du métier peut proposer d'autres moyens de fixation de l'élément de renfort 13 sur la surface externe 14 du carter de soufflante 10 sans pour autant sortir du cadre de l'invention.

Un aspect de l'invention porte également sur un carter de soufflante 10, tel qu'illustré sur la figure 6, présentant sur sa surface interne 12 un dommage 11. En outre, le carter de soufflante 10 présente, sur sa surface externe 14, un élément de renfort 13 fixé en regard du dommage 11.

Ce type de carter de soufflante 10 présente des propriétés mécaniques similaires à un carter de soufflante ne présentant pas de dommage sur sa surface interne.

## Revendications

1. Procédé (100) de réparation d'un carter de soufflante (10) présentant un dommage (11) sur sa surface interne (12), ledit procédé (100) comportant une étape (102) de fixation d'un élément de renfort (13) sur le carter de soufflante (10), ledit élément de renfort (13) étant fixé sur la surface externe (14) du carter de soufflante (10) et en regard du dommage (11).

2. Procédé (100) de réparation d'un carter de soufflante (10) selon la revendication 1 précédente, ledit procédé (100) comportant une étape préalable de dimensionnement (101) de l'élément de renfort (13).

3. Procédé (100) de réparation d'un carter de soufflante (10) selon la revendication 2 selon lequel l'étape de dimensionnement (101) de l'élément de renfort (13) est réalisée en estimant une zone de fissuration (15) prenant naissance au niveau de la surface interne (12) et sur le pourtour du dommage (11) et se propageant en s'évasant en direction de la surface externe (14) pour créer, sur la surface externe (14) du carter de soufflante (10), une surface de fissuration (S15) externe, la surface (18) de l'élément de renfort (13) devant être fixée sur la surface externe (14) du carter de soufflante (10) étant au moins égale à la surface de fissuration (S15) externe.

4. Procédé (100) de réparation d'un carter de soufflante (10) selon la revendication 2 selon lequel l'étape de dimensionnement (101) de l'élément de renfort (13) est réalisée en estimant une zone de fissuration (15) prenant naissance au niveau de la surface interne (12) et sur le pourtour du dommage (11) et se propageant en s'évasant en direction de la surface externe (14) pour créer, sur la surface externe (14) du carter de soufflante (10), une surface de fissuration (S15) externe, la surface (18) de l'élément de renfort (13) devant être fixée sur la surface externe (14) du carter de soufflante (10) étant égale à la surface de fissuration (S15) externe.

5. Procédé (100) de réparation d'un carter de soufflante (10) selon l'une quelconque des revendications 3 ou 4 selon lequel la zone de fissuration (15) prend naissance au niveau de la surface interne (12) et sur le pourtour du dommage (11) et se propage en s'évasant en direction de la surface externe (14) selon un angle de propagation (α) compris entre 40 et 50 degrés.

6. Procédé (100) de réparation d'un carter de soufflante (10) selon l'une quelconque des revendications précédentes selon lequel l'épaisseur (e13) de l'élément de renfort (13) est au moins égale à 1,5 fois la profondeur (p11) du dommage (11).

7. Procédé (100) de réparation d'un carter de soufflante (10) selon l'une quelconque des revendications précédentes selon lequel l'élément de renfort (13) est fixé sur la surface externe (14) du carter de soufflante (10) par soudage, par rivetage ou par collage.

8. Carter de soufflante (10) comportant un dommage (11) positionné sur la surface interne (12) du carter de soufflante (10) et un élément de renfort (13) fixé sur la surface externe (14) du carter de soufflante (10) et en regard dudit dommage (11), **caractérisé en ce que** l'élément de renfort (13) est dimensionné en estimant une zone de fissuration (15) prenant naissance au niveau de la surface interne (12) et sur le pourtour du dommage (11) et se propageant en s'évasant en direction de la surface externe (14) pour créer, sur la surface externe (14) du carter de soufflante (10), une surface de fissuration (S15) externe, la surface (18) de l'élément de renfort (13) devant être fixée sur la surface externe (14) du carter de soufflante (10) étant égale à la surface de fissuration (S15) externe.

9. Carter de soufflante (10) selon la revendication précédente selon lequel l'élément de renfort (13) est en aluminium, inconel, ou en titane.

10. Carter de soufflante (10) selon l'une des revendications 8 ou 9 selon lequel l'élément de renfort (13) présente une forme de type rectangulaire, circulaire ou elliptique.

## Patentansprüche

1. Reparaturverfahren (100) eines Gebläsegehäuses (10), das einen Schaden (11) auf seiner inneren Fläche (12) aufweist, wobei das genannte Verfahren (100) einen Befestigungsschritt (102) eines Verstärkungselements (13) auf dem Gebläsegehäuse (10) umfasst, wobei das genannte Verstärkungselement (13) auf der äußeren Fläche (14) des Gebläsegehäuses (10) und gegenüber dem Schaden (11) befestigt ist.

2. Reparaturverfahren (100) eines Gebläsegehäuses (10) gemäß dem voranstehenden Anspruch 1, wobei das genannte Verfahren (100) einen vorherigen Auslegungsschritt (101) des Verstärkungselements (13) umfasst.

3. Reparaturverfahren (100) eines Gebläsegehäuses (10) gemäß Anspruch 2, gemäß dem der Auslegungsschritt (101) des Verstärkungselements (13) per Schätzen eines Rissbildungsbereichs (15) realisiert wird, der an der inneren Fläche (12) und auf dem Umfang des Schadens (11) beginnt und sich erweiternd in Richtung der äußeren Fläche (14) verbreitet, um auf der äußeren Fläche (14) des Gebläsegehäuses (10) eine äußere Rissbildungsfläche (S15) herzustellen, wobei die Fläche (18) des Verstärkungselements (13) auf der äußeren Fläche (14) des Gebläsegehäuses (10) befestigt sein muss, die wenigstens gleich der äußeren Rissbildungsfläche (S15) ist.

4. Reparaturverfahren (100) eines Gebläsegehäuses (10) gemäß Anspruch 2, gemäß dem der Auslegungsschritt (101) des Verstärkungselements (13) per Schätzen eines Rissbildungsbereichs (15) realisiert wird, der an der inneren Flächen (12) und auf dem Umfang des Schadens (11) beginnt und sich erweiternd in Richtung der äußeren Fläche (14) verbreitet, um auf der äußeren Fläche (14) des Gebläsegehäuses (10) eine äußere Rissbildungsfläche (S15) herzustellen, wobei die Fläche (18) des Verstärkungselements (13) auf der äußeren Fläche (14) des Gebläsegehäuses (10) befestigt sein muss, die gleich der äußeren Rissbildungsfläche (S15) ist.

5. Reparaturverfahren (100) eines Gebläsegehäuses (10) gemäß irgendeinem der Ansprüche 3 oder 4, gemäß dem der Rissbildungsbereich (15) an der inneren Fläche (12) und auf dem Umfang des Schadens (11) beginnt und sich erweiternd in Richtung der äußeren Fläche (14) gemäß einem zwischen 40 und 50 Grad inbegriffenen Verbreitungswinkel (α) verbreitet.

6. Reparaturverfahren (100) eines Gebläsegehäuses (10) gemäß irgendeinem der voranstehenden Ansprüche, gemäß dem die Dicke (e13) des Verstärkungselements (13) wenigstens gleich 1,5 Mal die Tiefe (p11) des Schadens (11) ist.

7. Reparaturverfahren (100) eines Gebläsegehäuses (10) gemäß irgendeinem der voranstehenden Ansprüche, gemäß dem das Verstärkungselement (13) auf der äußeren Fläche (14) des Gebläsegehäuses (10) per Verschweißen, per Vernieten oder per Verkleben befestigt wird.

8. Gebläsegehäuse (10), umfassend einen Schaden (11), der auf der inneren Fläche (12) des Gebläsegehäuses (10) positioniert ist, und ein Verstärkungselement (13), das auf der äußeren Fläche (14) des Gebläsegehäuses (10) und gegenüber dem genannten Schaden (11) befestigt wird, **dadurch gekennzeichnet, dass** das Verstärkungselement (13) per Schätzen eines Rissbildungsbereichs (15) ausgelegt wird, der an der inneren Fläche (12) und auf dem Umfang des Schadens (11) beginnt und sich in Richtung der äußeren Fläche (14) erweitert um auf der äußeren Fläche (14) des Gebläsegehäuses (10) eine äußere Rissbildungsfläche (S15) herzustellen, wobei die Fläche (18) des Verstärkungselements (13) auf der äußeren Fläche (14) des Gebläsegehäuses (10) befestigt sein muss, die gleich der äußeren Rissbildungsfläche (S15) ist.

9. Gebläsegehäuse (10) gemäß dem voranstehenden Anspruch, gemäß dem das Verstärkungselement (13) aus Aluminium, Inconel oder aus Titan ist.

10. Gebläsegehäuse (10) gemäß einem der Ansprüche 8 oder 9, gemäß dem das Verstärkungselement (13) eine Form vom rechteckigen, kreisförmigen oder elliptischen Typ aufweist.

## Claims

1. Method (100) for repairing a fan casing (10) the inner surface (12) of which is subject to damage (11), where the said method (100) includes a step (102) of attaching a reinforcing member (13) to the fan casing (10), where the said reinforcing member (13) is attached to the outer surface (14) of the fan casing (10), opposite the location of the damage (11).

2. Method (100) for repairing a fan casing (10) according to previous claim 1, where the said method (100) includes a prior step of dimensioning (101) of the reinforcing member (13).

3. Method (100) for repairing a fan casing (10) according to claim 2, in which the step of dimensioning (101) of the reinforcing member (13) is accomplished by estimating a cracking zone (15) originating in the inner surface (12) and on the perimeter of the damage (11) and growing wider as it propagates in the direction of the outer surface (14) to create, on the outer surface (14) of the fan casing (10), an outer cracking area (S15), where the area (18) of the reinforcing member (13) which is to be attached to the outer surface (14) of the fan casing (10) is at least equal to the outer cracking area (S15).

4. Method (100) for repairing a fan casing (10) according to claim 2, in which the step of dimensioning (101) of the reinforcing member (13) is accomplished by estimating a cracking zone (15) originating in the inner surface (12) and on the perimeter of the damage (11) and growing wider as it propagates in the direction of the outer surface (14) to create, on the outer surface (14) of the fan casing (10), an outer cracking area (S15), where the area (18) of the reinforcing member (13) which is to be attached to the outer surface (14) of the fan casing (10) is equal to the outer cracking area (S15).

5. Method (100) for repairing a fan casing (10) according to either of claims 3 or 4, according to which the cracking zone (15) originates in the inner surface (12) and on the perimeter of the damage (11) and grows wider as it propagates in the direction of the outer surface (14) with a propagation angle (a) of between 40 and 50 degrees.

6. Method (100) for repairing a fan casing (10) according to any of the previous claims, according to which the thickness (e13) of the reinforcing member (13) is at least equal to 1.5 times the depth (p11) of the damage (11).

7. Method (100) for repairing a fan casing (10) according to any of the previous claims, according to which the reinforcing member (13) is attached to the outer surface (14) of the fan casing (10) by welding, riveting or bonding.

8. Fan casing (10) subject to damage (11) located on the inner surface (12) of the fan casing (10) and a reinforcing member (13) attached to the outer surface (14) of the fan casing (10) and opposite the said damage (11), wherein said reinforcing member (13) is dimensioned by is by estimating a cracking zone (15) originating in the inner surface (12) and on the perimeter of the damage (11) and growing wider as it propagates in the direction of the outer surface (14) to create, on the outer surface (14) of the fan casing (10), an outer cracking area (S15), where the area (18) of the reinforcing member (13) which is to be attached to the outer surface (14) of the fan casing (10) is equal to the outer cracking area (S15).

9. Fan casing (10) according to the previous claim, according to which the reinforcing member (13) is made of aluminium, Inconel, or titanium.

10. Fan casing (10) according to either of claims 8 or 9, according to which the shape of the reinforcing member (13) is rectangular, circular or elliptical.
